# EUROPÄISCHE PATENTSCHRIFT

(11) **EP 1 084 605 B1**
(45) Veröffentlichungstag und Bekanntmachung des Hinweises auf die Patenterteilung: **07.05.2008**
(21) Anmeldenummer: 00810821.9
(22) Anmeldetag: 13.09.2000
(51) Int. Cl.: A01D 89/00, A01D 87/04, A01D 90/02

(54) **Rechschwader für Ladewagen**
Windrower rake for loading wagon
Rateau andainer pour remorque chargeuse

(30) Priorität: 16.09.1999 CH 170499
(43) Veröffentlichungstag der Anmeldung: 21.03.2001
(73) Patentinhaber: Schuler, Franz, 6422 Steinen (CH)
(72) Erfinder: Schuler, Franz, 6422 Steinen (CH)

(56) Entgegenhaltungen:
- WO-A-94/10828
- DE-A- 1 482 806
- DE-A- 3 103 975
- DE-A- 3 117 041
- DE-U- 8 912 479
- FR-A- 1 100 244
- FR-A- 2 006 505
- US-A- 2 896 388
- US-A- 4 300 337

## Beschreibung

Gegenstand der Erfindung ist ein Ladewagen mit einer Aufnahmevorrichtung und seitlichen Rechschwadern zum Zusammenräumen des ausserhalb der Breite der Aufnahmevorrichtung liegenden Erntegutes, welche in eine Transportstellung schwenkbar sind, wobei die Zinken der Rechschwader fest auf einem umlaufenden Flachriemen montiert sind und jeder Rechschwader an seinem inneren Ende eine feste Abstreifschiene aufweist, welche das in die Mitte geräumte Erntegut von den Zinken abstreift.

In der Deutschen Offenlegungsschrift DE 31 17041 A1 ist ein Ladewagen dieser Art beschrieben. An diesem sind zwei Recheinheiten angeordnet, die mittels umlaufender Zinken das seitlich liegende Erntegut in die Mitte räumen. Diese Zinken liegen in Reihen nebeneinander, sodass ihre Umlaufbahnen in vertikalen Ebenen liegen. Diese Konstruktion ist nicht nur schwer, sodass Laufräder benötigt werden, sondern auch sehr sperrig, sodass sie zum Transport auf der Strasse nach oben geschwenkt werden müssen. Dies versperrt aber dem Fahrer des Ladewagens die Sicht zum Fahren.

Die Erfindung bezweckt die Schaffung eines Ladewagens der genannten Art, der die genannten Nachteile überwindet.

Die Erfindung besteht darin, dass die Umlaufebene des die Zinken tragenden Flachriemens horizontal mit einer leichten Abwärtsneigung in Fahrtrichtung liegt, und dass die Rechschwader seitlich nach vorn oder nach hinten einschwenkbar sind.

Die im wesentlichen horizontale Umlaufebene ergibt einen leichten Aufbau, sodass lediglich eine gewölbte Gleitsohle an Stelle von Laufrädern genügt, welche in Arbeitsstellung nahe an die Zinkenenden zu liegen kommt. Dies ermöglicht eine so schlanke Konstruktion, dass ein Einschwenken der Rechschwader in eine Transportstellung nach hinten, z.B. unter den Aufbau des Ladewagens möglich wird.

Die Abstreifschiene übergreift zwischen den Zinken die Umlenkrolle des Flachrienens, wobei der Mittelpunkt der Krümmung weiter vorn liegt als jener des Umlaufkreises der Zinkenenden.

Vorzugsweise sind die Rechschwader hydraulisch unter Abheben vom Boden unter den Ladewagenaufbau einschwenkbar. In der Zeichnung ist ein Ausführungsbeispiel der Erfindung dargestellt.

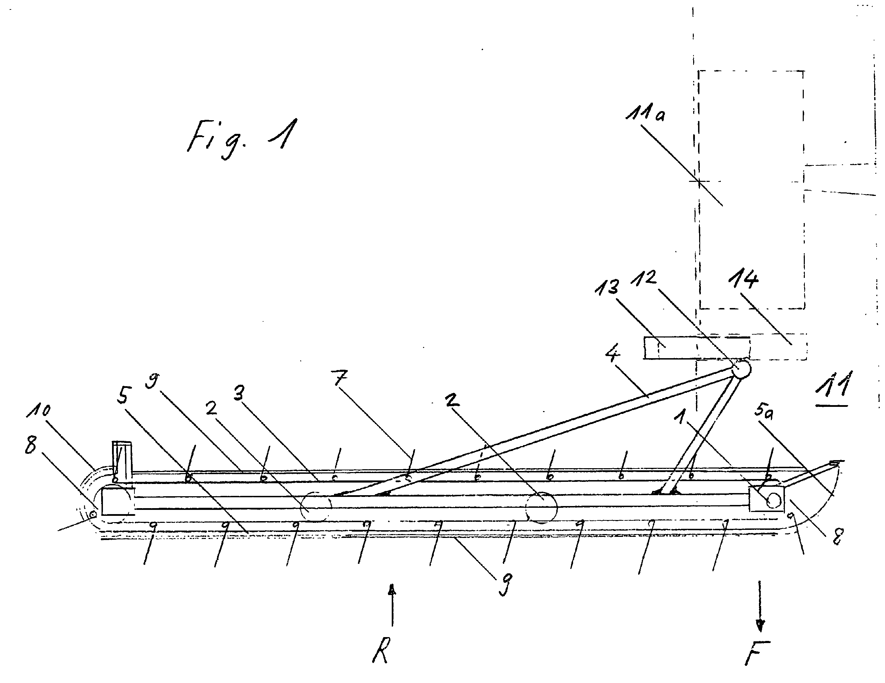

Fig. 1 zeigt den rechtsseitigen Rechschwader am Ladewagen in Draufsicht,

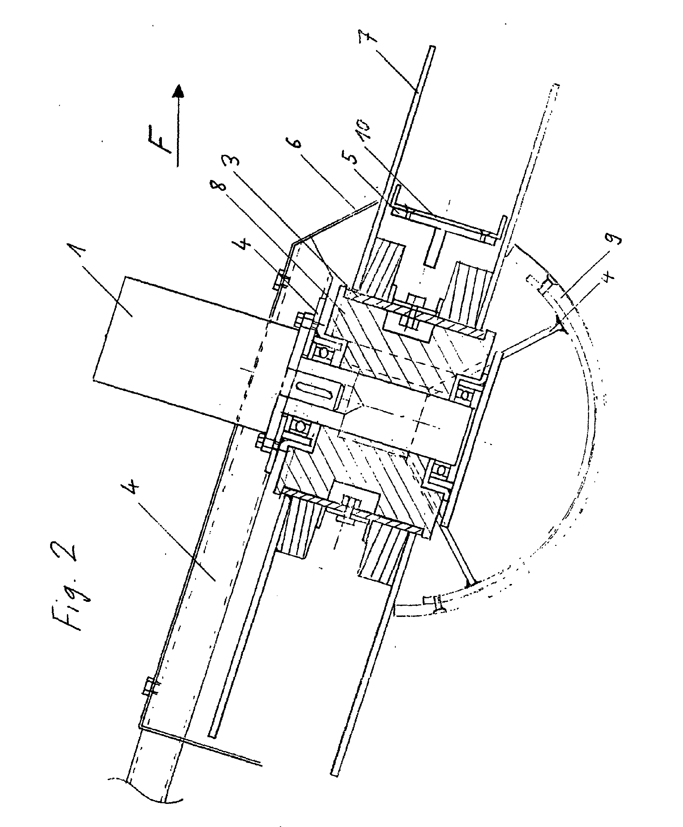

Fig. 2 das innere Ende des Rechschwaders von der Mitte her gesehen und
Fig. 3 dasselbe Ende in Draufsicht.

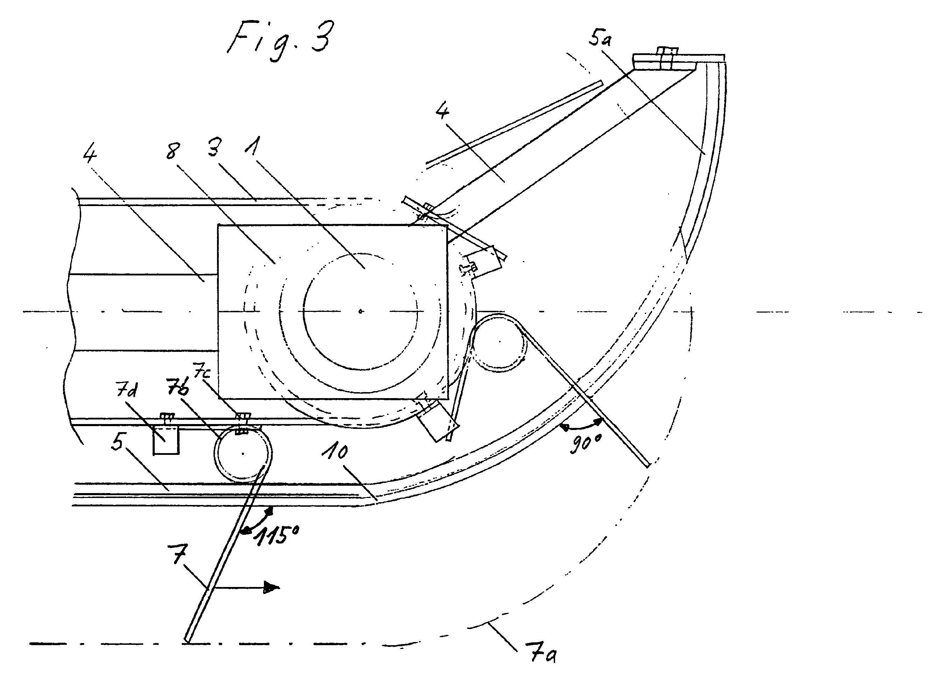

Mit 1 ist der Hydraulikmotor, mit 2 die Führungsrollen für den Flachriemen 3 und mit 4 der Tragrahmen des rechtsseitigen Rechschwaders R bezeichnet. Der Flachriemen 3 läuft um die innere und die äussere Umlenkrolle 8 und trägt die gefederten Doppelzinken 7, welche fest auf dem Riemen montiert sind. Der Rechschwader weist eine Abdeckschiene 5 auf, die am inneren Ende als Abstreifschiene 5a ausgebildet ist. Diese Abstreifschiene 5a übergreift die Umlenkrolle 8 zwischen den Doppelzinken 7 und weist eine Krümmung auf. Wie in Fig. 3 näher dargestellt, liegt ihr Krümmungsmittelpunkt weiter vorne als jener des Umlaufkreises 7a der Zinkenenden. Dies hat zur Folge, dass die Zinken während ihres Umlaufes um die innere Rolle 8 in der Abstreifschiene 5a verschwinden, wodurch die aufgesammelten Emtegutbüschel von den Zinken sauber abgesteift werden, unter den Ladewagen fallen und den zentralen Walm bilden. Die Winkelverhältnisse sind hierbei so gewählt, dass die Zinken geradlinig, d.h. unter einem rechten Winkel in die Abstreifschiene 5a eingezogen werden. Jede Doppelzinke 7 hat in bekannter Weise eine wendelförmige Federung 7b, ist bei 7c befestigt und bei 7d gegen verdrehen geführt.

Die Abdeckschiene 5 wie die Abstreifschiene 5a bestehen vorzugsweise aus Metall und tragen zwecks Lärmverminderung einen Belag 10 aus Kunststoff. Der Ladewagen ist mit 11 und dessen rechtsseitiges Rad mit 11a angedeutet.

Die Umlaufebene des zinkentragenden Flachriemens 3 liegt im wesentlichen horizontal mit einer leichten Abwärtsneigung von ca. 20° in Fahrtrichtung F.

Die Rechschwader gleiten auf einer Gleitsohle 9 auf dem Boden, welche vorzugsweise aus einer Hälfte eines Kunststoffrohres besteht. Diese Auflagerung anstelle von Laufrädern wird durch das niedrige Gewicht der Rechschwader ermöglicht und hat den Vorteil, einer guten Bodenauflage unmittelbar bei den Zinken 7.

Die Rechschwader können zur Fahrt auf der Strasse einwärts unter den Aufbau des Ladewagens geschwenkt werden. Diese Schwenkung erfolgt vorzugsweise hydraulisch unter gleichzeitigem Abheben vom Boden und Abschaltung des Hydraulikmotors 1. Je nach Bauart des Ladewagens sind die Rechschwader nach vorn oder nach hinten einschwenkbar über ein Kreuzgelenk 12 am Tragstutzen 13 in die ohnehin vorhanden Führungen 14 für die Absattelstützen eingeschoben und mit Klappverschluss gesichert, was durch den Ladewagenführer selbst erfolgen kann.

Die beschriebene Konstruktion bringt eine Reihe von Vorteilen: Vor allem wird die aufwendige Zinkensteuerung erübrigt, sie ist zudem kostengünstiger und leichter, was neben leichterer Handhabung im Einmann-Betrieb und einfacherer Lagerung, vor allem die Hangtauglichkeit nicht beeinträchtigt. Die flache Bauart der Rechschwader erlaubt deren Einschwenken unter den Aufbau des Ladewagens, sodass dessen Gesamtbreite in Transportstellung jene des Ladewagens allein nicht übersteigt. Zudem wird nur dank der flachen Bauart die Schwadbildung unter dem Ladewagenaufbau und somit unmittelbar vor der Aufnahmevorrichtung überhaupt möglich. Trotz der grossen Erfassungsbreite wird das Erntegut infolge der Abstreifschiene sauberer aufgenommen. Die Montage der Zinken ist zudem einfacher als bei herkömmlichen Rechschwader. Die Erfindung ist sowohl an gezogenen wie an selbstfahrenden Ladewagen anwendbar.

## Patentansprüche

1. Ladewagen mit einer Aufnahmevorrichtung und seitlichen Rechschwadern zum Zusammenräumen des ausserhalb der Breite der Aufnahmevorrichtung liegenden Erntegutes, welche in eine Transportstellung schwenkbar sind, wobei die Zinken (7) der Rechschwader (R) fest auf einem umlaufenden Flachriemen (3) montiert sind und jeder Rechschwader an seinem inneren Ende eine feste Abstreifschiene (5a) aufweist, welche das in die Mitte geräumte Erntegut von den Zinken abstreift, **dadurch gekennzeichnet, dass** die Umlaufebene des die Zinken tragenden Flachriemens (3) horizontal mit einer leichten Abwärtsneigung in Fahrtrichtung (F) liegt, und dass die Rechschwader seitlich nach vorn oder nach hinten einschwenkbar sind.

2. Ladewagen nach Anspruch 1, **dadurch gekennzeichnet, dass** die Rechschwader hydraulisch unter Abheben vom Boden einschwenkbar sind.

3. Ladewagen nach Anspruch 1, **dadurch gekennzeichnet, dass** die Abstreifschiene (5a) zwischen den Zinken (7) die Umlenkrolle (8) des Flachriemens (3) übergreift, wobei der Mittelpunkt ihrer Krümmung weiter vorn liegt, als jener des Umlaufkreises (7a) der Zinkenenden.

4. Ladewagen nach Anspruch 1, **dadurch gekennzeichnet, dass** die Rechschwader mit einer Gleitsohle (9) aus Kunststoff versehen sind.

## Claims

1. Wagon with pick-up attachment and side-mounted windrower rakes to collect together the product to be harvested lying outside the width of the pick-up attachment which can be pivoted in the transportation position, while the tines 7 of the windrower rakes R are fixed to a rotating flat frame 3 and each windrower rake is fitted with a stripper rail at its inner end which strips the harvested product from the tines, **characterised by** the fact that the plane of rotation of the tine-bearing flat frame (3) is horizontal with a slight upward inclination in the direction of travel (F) and that the windrower rakes on each side can be pivoted inwards forwards or backwards.

2. Wagon as described in claim 1, **characterised by** the fact that the windrower rakes can be pivoted inwards hydraulically as they are raised from the ground.

3. Wagon as described in claim 1, **characterised by** the fact that the stripper rails (5a) between the tines (7) project beyond than the flat frame (3) and the mid-point of the buckle lies further forward than that of the tine end rotation 7a.

4. Wagon as described in claim 1, **characterised by** the fact that each windrower rake is fitted with a plastic glider foot (9).

## Revendications

1. Chargeur avec un dispositif de prélèvement et des dispositifs de ratissage latéral pour rassembler la récolte située en dehors de la largeur du dispositif de prélèvement et qui sont pivotables en position de transport, alors que les dents (7) du dispositif de ratissage (R) sont fixées sur une courroie plate (3) rotative et que chaque dispositif de ratissage latéral présente une rail de raclage (5a) à son extrémité intérieure - lesquels rails permettent de racler la récolte située au milieu des dents et sont **caractérisés par le fait que** le plan de la trajectoire de la courroie plate (3) supportant les dents est horizontal avec une légère déclinaison dans le sens de la marche (F) et que les dispositifs de ratissage peuvent être repliés latéralement vers l'avant ou vers l'arrière.

2. Le chargeur selon la spécification 1 **caractérisée par le fait que** les dispositifs de ratissage sont repliés hydrauliquement du sol sous la structure du chargeur.

3. Le chargeur selon la spécification 1 **caractérisée par le fait que** le rail de raclage (5a) entre les dents (7) chevauche le rouleau de déviation (8) de la courroie plate (3), tandis que le point milieu de courbure se trouve beaucoup plus loin vers l'avant que celui de la trajectoire (7a) des extrémités des dents.

4. Le chargeur selon la spécification 1 **caractérisée par le fait que** les dispositifs de ratissage sont équipés d'un coulisseau (9) en matière synthétique.
